# EUROPEAN PATENT APPLICATION

(11) **EP 4 807 415 A2**
(43) Date of publication of application: **16.09.2026**
(21) Application number: 26193645.4
(22) Date of filing: 23.05.2025
(51) Int. Cl.: G02B 6/30

(54) **FIBER-WAVEGUIDE COUPLER AND METHOD FOR MANUFACTURING**

(30) Priority: 07.06.2024 DE 102024115945
(62) Document number(s) of the earlier application(s) in accordance with Art. 76 EPC: 25178538.2 / 4 660 675
(71) Applicant: LiGenTec SA, 1024 Ecublens (CH)
(72) Inventor: May, Stuart James, 1025 Saint-Sulpice (CH); Sacchetto, Davide, 1462 Yvonand (CH)
(74) Representative: Isarpatent

(57) **Abstract**

The present invention provides a method for manufacturing comprising depositing a mask layer on a first surface on a front side of a substrate, wherein the mask layer has at least one opening mark; depositing an intermediate layer on the mask layer; bonding a first oxide layer on the intermediate layer; depositing a stress compensation layer on a second surface on a back side of the substrate, wherein at least one of a material and a thickness of the stress compensation layer are selected for reducing a bow of the substrate; depositing a waveguide structure on the first oxide layer, wherein the waveguide structure has a core layer and a cladding layer, wherein the core layer has a predetermined width and a predetermined thickness and is aligned with the opening mark; and anisotropic etching of a V-groove into the substrate at the opening marker of the mask layer such that when a fiber having a predetermined size is placed inside the V-groove, a core of the fiber is centered with respect to the core layer of the waveguide structure. Further, the present invention provides a corresponding fiber-waveguide coupler, a further method for manufacturing a fiber-waveguide coupler as well as a corresponding further fiber-waveguide coupler.

## Description

The invention relates to a fiber-waveguide coupler as well as to a method for manufacturing a fiber-waveguide coupler.

### TECHNICAL BACKGROUND

In photonics, fiber-to-waveguide couplers are required for coupling an optical signal efficiently into a waveguide of a photonic integrated structure, which are fabricated on a semiconductor platform. For such photonic structures, when very thick cladding thickness are required, it is difficult for a fabrication process of a V-groove based on a sequence of deposition and etching steps to meet the tight tolerances that are required for a passive Optical Fiber alignment to a waveguide of the photonic integrated structure.

Wafer to wafer fusion bonding may offer one solution for integrating a V-Groove with thick claddings, however, this imposes a number of additional challenges. The technical requirements for high accuracy fusion bonding are low surface roughness, typically less than 0.5 nm. Such a surface roughness is typically measured by Atomic Force Microscopy. The requirements also relate to a wafer bow or substrate bow that should be less than 30 µm across the substrate for optimum alignment accuracy. In such processes, dielectric materials are often required to create bondable surfaces with a high bonding strength. Furthermore, a limitation of particle contamination of a certain size is necessary, typically about 50 particles of about 90 nm size or more on the surface is required for high-quality bonding. A rather flat surface topography or small gradient typically smaller 10 nm is required for a successful bonding.

US 20240053551 A1 describes a photonic integrated circuit having a V-groove cavity substrate in a substrate.

Therefore, there is a need for an improved fabrication process for V-grooves on a semiconductor substrate with an edge-type fiber-waveguide coupler for end-fire optical coupling.

### SUMMARY OF THE INVENTION

According to the invention, this problem is solved in each case by the subject matters of the independent claims.

According to a first aspect of the invention, a method for manufacturing a waveguide coupler is provided. The method comprises depositing a mask layer on a first surface on a front side of a substrate, wherein the mask layer has at least one opening mark; depositing an intermediate layer on the mask layer; bonding a first oxide layer on the intermediate layer; depositing a stress compensation layer on a second surface on a back side of the substrate, wherein at least one of a material and a thickness of the stress compensation layer are selected for reducing a bow of the substrate; depositing a waveguide structure on the first oxide layer, wherein the waveguide structure has a core layer and a cladding layer, wherein the core layer has a predetermined width and a predetermined thickness and is aligned with the opening mark; etching locally the waveguide structure and the first oxide layer to form an opening above the opening marker; and anisotropic etching of a V-groove into the substrate at the opening marker of the mask layer such that when a fiber having a predetermined size is placed inside the V-groove, a core of the fiber is centered with respect to the core layer of the waveguide structure.

According to a second aspect of the invention, a fiber-waveguide coupler is provided. The fiber-waveguide coupler comprises a substrate having a first surface on a front side and a second surface opposing the first surface on a back side, the first surface of the substrate having a V-groove etched extending in a Z-direction, wherein the Z-direction is substantially orthogonal to the first surface, a first oxide layer on the front side of the substrate, a waveguide structure deposited on the first oxide layer, wherein the waveguide structure has a core layer and a cladding layer, wherein the core layer has a predetermined width and a predetermined thickness, wherein the V-groove is arranged in an opening of the waveguide structure and the first oxide layer, wherein the core layer is aligned with the V-groove such when a fiber having a predetermined size is placed inside the V-groove, a core of the fiber is centered with respect to the core layer of the waveguide structure, and a stress compensation layer deposited on the second surface of the substrate, wherein at least one of a material of the stress compensation layer and a thickness of the stress compensation layer are selected for reducing a bow of the substrate.

A fundamental idea of the present invention is to provide a method and corresponding fiber coupler that involves bonding an oxide layer, which enables thicker coupler structures for improved photonic structures. In order to reduce the bow of the fiber-waveguide coupler, a stress compensation layer is deposited or bonded on the backside of the substrate to compensate for the stress caused by the bonding of the thick oxide layer.

In this process, a mask layer, which is typically a hard mask, is deposited on a substrate, which typically is a wafer made of silicon, but not limited to such material. For example, also InP substrates may be employed for this method. The mask layer has an opening, which is used to mark the location of the V-groove for an etching process. In order to form a layer with reduced topography while preserving the functionality of the mask layer, the mask layer may be embedded inside a (first) intermediate layer deposited after the mask layer is patterned. This first intermediate layer might be self-planarizing or it may essentially reproduce the topography of the patterned mask. In this case, a polishing step might be required to form a bondable surface with low surface topography and low surface roughness. Once the bondable surface is formed, the first oxide layer is bonded onto the top. This step may require the removal of a substrate that was originally carrying the first oxide.

Further, a stress compensation layer is deposited or bonded onto the back side or back surface (second surface) of the substrate. The stress compensation layer is adapted such that the stress of the material or the thickness of the stress compensation layer are selected for reducing the bow of the substrate caused by the bonding of the (first) oxide layer on the front side. A suitable material for the stress compensation layer is characterized by a high compressive strength such that it can counteract the stress caused by the fabrication process. In particular, the compressive strength of such material may be higher than the stress value of the first oxide layer. The material of the stress compensation layer may be an oxide, such as SiO2, or may even be a metal, as will be described further below.

Furthermore, a waveguide structure is deposited onto the oxide layer. The waveguide structure is characterized by a core layer and a cladding layer that supports the propagation of an optical mode. Typically, the core layer has a higher refractive index than the cladding layer, which typically surrounds the core layer. In that way, an optical mode coupled to the core layer propagates in the core layer. The waveguide structure may have a core layer composed of multiple core and multiple cladding layers. The core layer has a predetermined width and thickness to support only a limited number of modes, typically a single mode. The dimensions of the waveguide also determine the mode area or mode field diameter of the mode. When using silicon nitride (SiN) as core material, typical values for the width are about 50 nm to several µm and the thickness is about 50 nm to 800 nm. The location of the core layer in the cross-section orthogonal to the surface of the wafer is aligned with the opening marker of the mask layer. Typically, the core layer is located directly above the opening of the mask layer. Above in this sense means in a direction orthogonal to the first surface of the substrate. However, an offset might also be applied in case of the use of special fibers.

Finally, anisotropic etching of a V-groove into the substrate at the location of the opening of the mask layer is conducted. For this, the above layers, i.e., the waveguide structure and the oxide layer above the opening marker is removed as well. Such a cavity exposes the substrate surface where the V-groove will be formed. In crystalline silicon with <100> surface orientation, the etching can be performed by KOH or TMAH or by plasma etching techniques. This allows forming a suitable V-groove with a trench along the 〈110〉 crystallographic plane, and surfaces in the <111> plane. However, the method is not limited to this particular case.

The V-groove is etched in such a way that a fiber having a predetermined size and placed inside the V-groove is centered with respect to the core layer of the waveguide structure. For example, a standard single mode fiber, such as a SMF-28 (e.g. SMF-28 ULL from Corning) having a core diameter of about 8 µm and a cladding diameter of 125 µm placed into the V-groove such that their surfaces mechanically support the fiber will have its core centered with respect to the core layer of the waveguide structure for optimum coupling efficiency between the fiber and the waveguide. Of course, the fiber-waveguide coupler is not limited to this type of single mode fiber and may support large mode area single mode fibers, few mode fibers and even multimode fibers.

A fabrication flow based on bonding according to the present invention provides the advantage in that it is faster and more reliable in terms of the alignment accuracy of the final V-groove relative to the optical waveguide. Furthermore, only a relatively low alignment accuracy of even higher than 100 nm for the bonding procedure is required for arriving at a satisfactory end product. Still, the bonding process allows higher accuracies of less than 100 nm than needed at this stage of development, thus the inventive method harbors the potential to meet higher demands in the future. The relatively low requirements result in a strong cost reduction of the fabrication process and wafers.

Throughout this document, depositing a first layer on a second layer describes the general approach of attaching the first layer on a second layer. This can be performed by any suitable process, such as chemical vapor deposition, CVD, such as low pressure CVD or plasma enhanced CVD, bonding, such as wafer-to-wafer bonding, or any other suitable process. Furthermore, by depositing or by arranging of a first layer on a second layer by bonding, it is understood as the more specific form of bonding the first layer directly onto the second layer.

According to some further aspects according to the invention, the intermediate layer has a bondable top surface. Bonding the first oxide layer on the mask layer comprises: bonding the first oxide layer on the bondable top surface of the intermediate layer; wherein bonding the first oxide layer on the mask layer comprises: bonding the first oxide layer on the bondable top surface of the intermediate layer. A bondable top surface is understood to be a surface that promotes bonding to another semiconductor or oxide layer. For a suitable bondable top surface, dielectric materials such as SiO2, SiCxNy, SiOxNy, Al2O3 can be used for the underlying material, in this case the intermediate layer. As described before, the intermediate layer further has the function to planarize the mask layer, which also promotes bonding of the first oxide layer. In this way, the bonding of the first oxide layer can be performed with higher accuracy and yield, thus arriving at a more planar and stable stack of layers.

According to some further aspects according to the invention, the bonding of the first oxide layer comprises: bonding a second substrate having the first oxide layer deposited on a front side onto the bondable top surface of the intermediate layer, and etching the second substrate from the first oxide layer. This wafer-to-wafer bonding process is particularly suitable for meeting the high requirements of flatness and bow, since these involves only high-quality surfaces, i.e. the bondable top surface of the intermediate layer and the top surface of the first oxide layer, which is bonded to the bondable top surface. In some embodiments, an additional oxide layer is deposited on a back side of the second substrate. Typically, the first and additional oxide layers can be deposited on the second substrate in the same process, such as chemical vapor deposition, CVD. Therefore, the additional oxide layer is identical to the first oxide layer in terms of material and thickness. In this way, the bow of the second substrate is reduced, which aids in wafer-to-wafer bonding. The second oxide layer is then etched as well as the second substrate to leave the stack of layers, containing the substrate, the mask layer, the intermediate layer the first oxide layer, and, optionally at this stage, the stress compensation layer.

According to some further aspects according to the invention, the waveguide structure comprises: the core layer on the first oxide layer; and a first cladding layer on the core layer and the first oxide layer, wherein the first cladding layer has a bondable top surface; and a second cladding layer on the bondable top surface of the first cladding layer. This represents a simple waveguide structure, in which the cladding of the core layer is provided by the first oxide layer at the bottom and the first cladding layer at the top and the sides of the first core layer. In this case, the refractive index of the first oxide layer and the first cladding layer is lower than the refractive index of the core layer. The core layer can be formed by Si3N4 or any other suitable high-refractive index material. Above the first cladding layer, a second cladding layer is deposited for improved confinement of the optical mode in the core layer.

According to some further aspects according to the invention, the method further comprises providing a third substrate comprising a second oxide layer on a front side of the third substrate, the second oxide layer having a bondable top surface, bonding the second oxide layer on the waveguide structure, and etching the substrate to expose the second oxide layer. In this way, a high-quality second oxide layer is attached on top of the waveguide structure such that a confinement of the propagating modes is improved and fiber to chip coupling loss reduced. Furthermore, the second oxide layer provides a physical protection for the waveguide structure.

According to some further aspects according to the invention, the method further comprises depositing a second stress compensation layer on the backside first cladding layer. In this way, the stress caused by the third oxide layer can be compensated and a bow of the substrate is reduced.

According to some further aspects according to the invention, the opening marker has a rectangular shape. This form of the opening marker is suitable for the etching of the V-groove.

According to some other aspects according to the invention, the mask layer is patterned with a tapered width such that the V-groove has a depth changing along the Z-direction, the Z-direction substantially orthogonal to the top surface. This can be used to tailor the height of the fiber relative to the waveguide core.

According to some further aspects according to the invention, the stress compensation layer comprises a metal. The stress compensation layer may also comprise a material, which has a high compressive strength and a high heat conductivity in order to be able to dissipate heat. Furthermore, the material of the stress compensation layer is configured to withstand temperatures of about 1300°C, which are applied during the fabrication of a photonic integrated circuit, which includes the fiber-waveguide coupler of the present invention. For this, metals, in particular tungsten and tungsten-based alloys, are suitable materials for the stress compensation layer.

According to some further aspects according to the invention, a backside cladding structure comprising a cladding layer is deposited on the stress compensation layer, wherein a material and a thickness of the backside cladding structure and the waveguide structure are substantially the same. As described above, with this embodiment, it is possible to compensate for the stress caused by the deposition of the waveguide structure on the first oxide layer and the substrate. The backside cladding structure may also be designed to have a thickness and materials of all cladding layers deposited on the front side of the structure. By choosing the same material as the front side cladding layers, the backside first cladding layer causes a similar stress as the deposition of the waveguide structure. This reduces the bow of the substrate considerably.

According to some further aspects according to the invention, the waveguide structure comprises: a first cladding layer on the first oxide layer, a first core layer on the first cladding layer, a second cladding layer on the first core layer and the first cladding layer, a second core layer on the second cladding layer, wherein the second core layer has a predetermined second width and a second thickness; a third cladding layer on the second core layer and the second cladding layer, wherein a core of a fiber having a predetermined size and placed inside the V-groove is centered with respect to one of the first core layer and the second core layer of the waveguide structure. In this embodiment, the waveguide structure comprises a second core layer, which may be located in the vicinity of the first core layer. In this way, it is possible to manipulate the optical mode to have a larger mode area for improved coupling efficiency. A multilayer photonic structure can also be established by this embodiment. It is understood that the waveguide structure may also comprise more than two core layers and more than three cladding layers, which allows even more flexibility for photonic circuits integrated in the waveguide structure.

According to some further aspects according to the invention, wherein the backside cladding structure comprises: a backside first cladding layer deposited on the stress compensation layer, a backside second cladding layer deposited on the backside first cladding layer, a backside third cladding layer deposited on the backside second cladding layer, wherein a material and a thickness of the respective backside first, second and third cladding layers and respective the first, second and third cladding layers are substantially the same. This structure compensates the stress caused by the deposition of the aforementioned waveguide structure including two core layers and three cladding layers on the first oxide layer. This reduces the bow of the substrate considerably. It is understood that for a waveguide structure with more than three cladding layers, a similar amount of corresponding backside cladding layers may be deposited.

According to some further aspects according to the invention, the fiber-waveguide coupler further comprises a mask layer deposited between the substrate, the mask layer having an opening marker located above the V-groove. The intermediate layer is arranged between the mask layer and the first oxide layer. The opening of the waveguide structure and the first oxide layer is arranged above the opening marker. Although the mask layer and the intermediate layer are not directly involved in the fiber coupling and photonic waveguides in the waveguide structure, these layers are useful for the manufacturing process, as described above.

According to some further aspects according to the invention, the fiber-waveguide coupler further comprises a second oxide layer deposited on the waveguide structure. In this way, a high-quality additional oxide layer is attached on the top of the waveguide structure such that a confinement of the propagating modes is improved and coupling loss reduced.

According to some further aspects according to the invention, the fiber-waveguide coupler further comprises a second stress compensation layer deposited on the backside cladding layer structure. In this way, the stress caused by the third oxide layer can be compensated and a bow of the substrate is reduced, as described above.

According to a third aspect of the invention, a further method for manufacturing a waveguide coupler is provided. The method comprises etching a pair of alignment markers into a first surface on a front side of a substrate; depositing a mask layer having at least one opening marker spaced apart from the pair of alignment markers at a predetermined distance; anisotropic etching a reference V-groove into the substrate through the opening marker; etching the mask layer in order to expose the first surface of the substrate; depositing a first oxide layer on the first surface of the substrate; depositing a backside first oxide layer onto a second surface on a back side of the substrate, the back side of the substrate opposing the front side of the substrate, wherein a material and a thickness of the backside first oxide layer and the first oxide layer are substantially the same; depositing a waveguide structure comprising at least a cladding layer and a core layer onto the first oxide layer; depositing a backside cladding structure onto the backside oxide layer, wherein a thickness of the backside cladding structure and the waveguide structure are substantially the same; etching locally the waveguide structure and the first oxide layer to form an opening above the opening marker; and anisotropic etching a second V-groove spaced apart at a predetermined distance from the reference V-groove such that when a fiber having a predetermined size is placed inside the V-groove, a core of the fiber is centered with respect to the core layer of the waveguide structure.

According to a fourth aspect of the invention, a further fiber-waveguide coupler is provided. The fiber-waveguide coupler comprises a substrate having a first surface and a second surface opposing the first surface, the first surface of the substrate comprising a pair of alignment markers, a reference V-groove spaced apart by a predetermined distance from the alignment markers, a V-groove spaced apart by a predetermined distance from the reference groove and extending in a direction Z-direction, wherein the Z-direction is substantially orthogonal to the first surface; a first oxide layer on the first surface of the substrate, a backside first oxide layer deposited on the back side of the substrate, a waveguide structure deposited on the first oxide layer, the waveguide structure comprising a core layer and a cladding layer, wherein the core layer has a predetermined width and a predetermined thickness, wherein the V-groove is arranged in an opening of the waveguide structure and the first oxide layer, and a backside cladding structure deposited on the backside first oxide layer, wherein a thickness of the backside cladding structure and the waveguide structure are substantially the same.

A further fundamental idea the present invention is to compensate for a crystalline <100> substrate, in which the <100> crystal plane is not exactly parallel to the surface of the substrate, which typically is a wafer. Therefore, the substrate comprises a pair of alignment marks and a reference V-groove to find out the crystal axis of the substrate. As described in the German Patent Application 102023136803.6 filed on 28.12.2023, these allow determining the crystalline planes so that the core layer can be adjusted to the final V-groove etched into the substrate.

A further idea of this further method is to provide identical first oxide layers on the front and the back side of the substrate. The backside first oxide layer serves as the stress compensation layer. However, due to the etched mask layer, the front and back side of the substrate are identical at this stage of the manufacturing process, so that the bow of the substrate can be compensated in an optimum way. Furthermore, the deposition of the front side and backside first oxide layers typically can be performed simultaneously by the same process, which typically is a low pressure CVD process. Thus, these layers can be deposited in identical thickness and materials in a reliable way.

According to some further aspects according to the invention, the further method comprises bonding a second oxide layer onto the waveguide structure, and bonding a second stress compensation layer onto the backside cladding structure. Accordingly, the fiber-waveguide coupler according to some further aspects of the invention further comprises a second oxide layer deposited on the waveguide structure, a second stress compensation layer deposited onto the backside cladding structure. In this way, a high-quality second oxide layer is attached on top of the waveguide structure such that confinement of the propagating modes is improved and the coupling loss reduced. This second stress compensation layer in this embodiment thus corresponds to the second stress compensation layer of the first method and fiber-waveguide coupler. In this way, the stress caused by the second oxide layer can be compensated and a bow of the substrate is reduced.

The above embodiments and further developments can be combined with each other as desired, if appropriate. In particular, all features of the fiber-waveguide coupler are transferable to the method for manufacturing the fiber-waveguide coupler, as well as the further method for manufacturing the fiber-waveguide coupler and the resulting further fiber-waveguide coupler, and vice versa. Other possible aspects, further developments and implementations of the invention also include combinations of features of the invention described above or below with regard to the embodiment examples that are not explicitly mentioned. In particular, the skilled person will also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
- Fig. 1: shows a flow chart for a method for manufacturing of a fiber-waveguide coupler according to an embodiment of the invention;
- Fig. 2: shows a flow chart for a method for manufacturing of a fiber-waveguide coupler according to a further embodiment of the invention;
- Fig. 3a-d: show cross sections of fiber-waveguide couplers according to an embodiment of the invention;
- Fig. 4a-b: show cross sections of intermediate products of a fiber-waveguide coupler in the method for manufacturing according to a further embodiment of the invention;
- Fig. 5: shows a schematic illustration of an intermediate product of a fiber-waveguide coupler in the method for manufacturing according to an embodiment of the invention;
- Fig. 6: shows a schematic illustration of an intermediate product of a fiber-waveguide coupler in the method for manufacturing according to a further embodiment of the invention;
- Fig. 7a-c: show a schematic illustration of fiber-waveguide couplers according to a further embodiment of the invention;
- Fig. 8: shows a flow chart for a method for manufacturing of a fiber-waveguide coupler according to a further embodiment of the invention; and
- Fig. 9a-e: show a schematic illustration of a fiber-waveguide couplers according to a further embodiment of the invention;

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect and have the same reference signs - unless explained otherwise.

### DESCRIPTION OF EMBODIMENTS

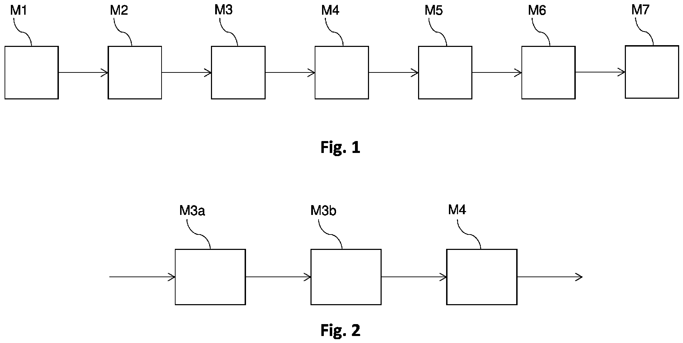

Fig. 1 shows a flow chart for a method for manufacturing of a fiber-waveguide coupler according to an embodiment of the invention.

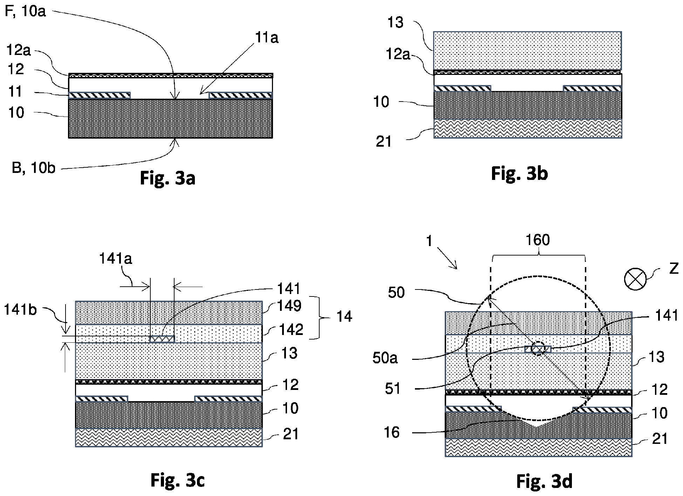

In this method, as also shown in Fig. 3a, a mask layer 11 is deposited in step M1 on a first surface 10a on a front side F of a substrate 10. The mask layer 11 has at least one opening marker 11a, that will be used in an etching step for the V-groove. An intermediate layer 12 is deposited in step M2 on the mask layer 11. Such deposition can be performed by CVD or any other suitable process. As also shown in Fig. 3b, a first oxide layer 13 is bonded on the intermediate layer 12 in step M3. The thickness of this oxide layer is typically relatively thick compared to the mask or the intermediate layer. A stress compensation layer 21 is deposited in step M4 on a second surface 10b on a back side B of the substrate 10. At least one of a material and a thickness of the stress compensation layer 21 are selected for reducing a bow of the substrate 10. The stress compensation layer 21 might be chosen to compensate for additional stress coming from further processing, for instance, the thickness of the compensation layer 21 might be chosen to compensate for the combination of stress coming from a group of layers forming a waveguide structure 14 as depicted in Figure 3c.

A waveguide structure 14 is deposited in step M5 on the first oxide layer 13. In further embodiments, other functional structures might be deposited onto the first oxide layer 13, in particular before depositing the waveguide structure 14 on these structures. The waveguide structure 14 has a core layer 141, 143, 145 and a cladding layer 142, 144, 146, 148, 149. The core layer 141, 143, 145 has a predetermined width 141a, 143a, 145a and a predetermined thickness 141b, 143b, 145b and is aligned with the opening marker 11a (see also Fig. 3a). It is understood that the waveguide structure supports optical modes propagating in the core layer through a photonic integrated circuit formed in the waveguide structure. Thus, a refractive index of the core layer typically is higher than a refractive index of the cladding layer, which typically surrounds at least partly the core layer.

The waveguide structure 14 and the first oxide layer 13 are etched locally in step M6 to form an opening 160 above the opening marker 11a. In this step, all layers above the opening marker 11a are etched, resulting in the opening 160.

A V-groove 16 is etched in step M7 into the substrate 10 at the opening marker 11a of the mask layer 11 by an anisotropic etching process (see Fig. 3d). Typically, cor silicon substrates, this is performed using KOH or TMAH as etchant. In some embodiments, the opening marker 11a has a rectangular shape optimized for the V-groove 16. In further embodiments, the mask layer 11 is patterned with a tapered width such that the V-groove has 16 a depth changing along a Z-direction Z, the Z-direction substantially orthogonal to the top surface. The etching is performed such that when a fiber 50 having a predetermined size 50a is placed inside the V-groove 16, a core 51 of the fiber 50 is centered with respect to the core layer 141, 143, 145 of the waveguide structure 14.

Fig. 2 shows a flow chart for a method for manufacturing of a fiber-waveguide coupler according to a further embodiment of the invention.

The embodiment shown in Fig. 2 is based on the embodiment of the method described before with reference to Fig. 1. In the following explanations, only the differences with respect to the previously described embodiment are emphasized.

In this embodiment, the intermediate layer 12 has a bondable top surface. A bondable top surface is understood to be a surface that promotes bonding to another semiconductor or dielectric layer. For a suitable bondable top surface, materials such as SiO2, SiCxNy, SiOxNy, or Al2O3 can be used for the underlying material, in this case the intermediate layer.

Consequently, the bonding M3 of the first oxide layer 13 on the mask layer 11 is performed by bonding M3 the first oxide layer 13 on the bondable top surface 12a of the intermediate layer.

Furthermore, and shown in Fig. 2, in a practical application, the bonding M3 of the first oxide layer 13 typically is performed by bonding M3a a second substrate 30 having the first oxide layer 13 deposited on a front side with a subsequent etching M3b the second substrate 30 from the first oxide layer 13. Such a bonding typically is performed by a wafer-to-wafer bonding process, which is particularly suitable for meeting the high requirements of flatness and bow, since these involves only high-quality surfaces, i.e., the bondable top surface of the intermediate layer and the top surface of the first oxide layer, which is bonded to the bondable top surface.

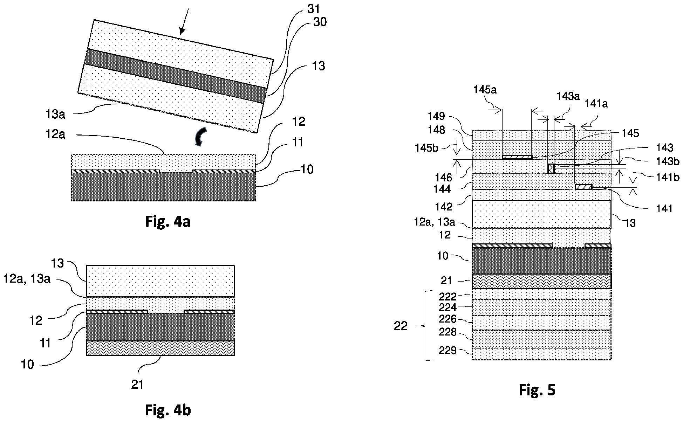

As will be described further below in detail, in some embodiments, such a second substrate 30 has an additional oxide layer 31 deposited on a back side of the second substrate 30 (as also shown in Fig. 4a). During the etching step M3b, the second substrate 30 is etched together with the additional oxide layer 31 from the first oxide layer 13 (as also shown in Fig. 4b). Typically, the first oxide layer 13 and the additional oxide layer 31 are deposited on the second substrate in the same process, such as chemical vapor deposition, CVD. Therefore, the additional oxide layer is identical to the first oxide layer in terms of material and thickness.

Fig. 3a-d show cross sections of a fiber-waveguide coupler according to an embodiment of the invention.

Fig. 3a to Fig. 3d describe the different steps in the manufacturing process of the fiber-waveguide coupler 1. This manufacturing process is based on the method of manufacturing a fiber-waveguide coupler 1 as described above with reference to Fig. 1 and 2.

In Fig. 3a, a substrate 10 having a first surface 10a on a front side F and a second surface 10b opposing the first surface 10a on a back side B is shown. A mask layer 11 is deposited on the substrate 10, the mask layer 11 having an opening marker 11a. An intermediate layer 12 is deposited on the mask layer 11, filling the opening marker 11a. The intermediate layer 12 has a bondable surface 12a, as described in the previous embodiment of the method above.

In Fig. 3b, a first oxide layer 13 is deposited by a bonding process onto the bondable top surface 12a of the intermediate layer 11. Furthermore, a stress compensation layer 21 is deposited on the second surface 10b on the back side B of the substrate 10. This stress compensation layer 21 is designed such that at least one of a material of the stress compensation layer 21 and a thickness of the stress compensation layer 21 are selected for reducing a bow of the substrate 10. A suitable material for the stress compensation layer 21 is characterized by a high compressive strength such that it can absorb the stress caused by the bonding process of the oxide layer 13 onto the intermediate oxide 11. In particular, the compressive strength of such material may be higher than the material of the substrate. In some embodiments, the material of the stress compensation layer 21 is an oxide, for example SiO2. In further embodiments, the stress compensation layer 21 is made of a metal such as tungsten. A metal increases the thermal conductivity, which is suitable for cooling the waveguide structure 14, in particular in the case where heaters are employed. Tungsten or a tungsten-based alloy as material can withstand the temperatures of up to 1300°C during the fabrication processes.

In Fig. 3c, a waveguide structure 14 is deposited on the first oxide layer 13. The waveguide structure 14 has a core layer 141 and a cladding layer 142. In this particular embodiment, the waveguide structure 14 has an additional cladding layer 149 on top the cladding layer 142 for improved confinement of the optical mode. The core layer 141 has a predetermined width 141a and a predetermined thickness 141b, both adapted to a desired mode field diameter or shape of the optical mode (not shown) that can be coupled into the core layer 141.

In Fig. 3d, the waveguide structure 14 and the first oxide layer 13 have been etched locally to form an opening 160 above the opening marker 11a. The first surface of the substrate 10 has a V-groove, which has been etched into the first surface 10a of the substrate 10 by an anisotropic etching process. The V-groove 16 is thus arranged in the opening 160 of the waveguide structure 14 and the first oxide layer 13.

The V-groove 16 is extending in a Z-direction. The Z-direction is substantially orthogonal to the first surface 10a. The first oxide layer 13 on the front side of the substrate 10 is located above the V-groove 16. The core layer 141 is aligned with the V-groove 16 such that when a fiber 50 having a predetermined size 50a is placed inside the V-groove 16, a core 51 of the fiber 50 is centered with respect to the core layer 141 of the waveguide structure 14, as shown in Fig. 3d. The predetermined size 50a in this case is indicated as the diameter of the fiber 50 having a circular cross section. For example, a standard single mode fiber, such as a SMF-28 (e.g. SMF-28 ULL from Corning) having a core diameter of about 8 µm and a cladding diameter of 125 µm placed into the V-groove such that their surfaces mechanically support the fiber will have its core centered with respect to the core layer of the waveguide structure for optimum coupling efficiency between the fiber and the waveguide. The fiber-waveguide coupler 1 is not limited to this type of particular single mode fiber and may support large mode area single mode fibers, few mode fibers and even multimode fibers.

In some embodiments, the opening marker 11a has a rectangular shape for promoting the etching of the V-groove 16. Furthermore, in some embodiments, the mask layer 11 is patterned with a tapered width such that the V-groove has 16 a depth changing along the Z-direction Z. This can be used to tailor the height of the fiber relative to the waveguide core.

Fig. 4a-b show cross sections of intermediate products of a fiber-waveguide coupler in the method for manufacturing according to a further embodiment of the invention.

Fig. 4a and 4b describe different steps in the manufacturing process of the fiber-waveguide coupler 1. This manufacturing process is based on the method of manufacturing a fiber-waveguide coupler 1 as described above with reference to Fig. 1 and 2.

In Fig. 4a, the intermediate layer 12 has a bondable top surface 12a. The bonding M3 of the first oxide layer 13 on the intermediate layer 12 is performed by bonding M3 the first oxide layer 13 on the bondable top surface 12a of the intermediate layer.

Furthermore, the bonding step M3 is performed by providing a second substrate 30 that has the first oxide layer 13 deposited on a front side. In this embodiment, the first oxide deposited on the second substrate 30 has a bondable surface 13 as well. In addition, the second substrate 30 has an additional oxide layer 31 deposited on the back side of the second substrate 30. Typically, the first oxide layer 13 and the additional oxide layer 31 are deposited on the second substrate 30 in the same process, such as chemical vapor deposition, CVD. Therefore, the additional oxide layer 31 is identical to the first oxide layer 13 in terms of material and thickness.

In some embodiments, the substrate 10 and the second substrate 30 are wafers, typically made of silicon. In some embodiments, these substrates 10, 30 are made of InP. The bonding of the first oxide layer 13 onto the intermediate layer 12 is performed by wafer-to-wafer bonding.

In Fig. 4b, the first oxide layer 13 is bonded on the intermediate layer 11. The second substrate 30 together with the additional oxide layer 31 are etched so that the first oxide layer 13 is exposed as the top layer of the stack of layers.

Fig. 5 shows a schematic illustration of an intermediate product of a fiber-waveguide coupler in the method for manufacturing according to an embodiment of the invention.

The embodiment of an intermediate product of a fiber-waveguide coupler 1 shown in Fig. 5 is based on the fiber-waveguide couplers 1 and/or methods for manufacturing as described above. Only particular differences will be described compared to the intermediate products and the fiber-waveguide couplers 1 as described before.

In this embodiment, the waveguide structure 14 is composed of a first cladding layer 142 deposited on the first oxide layer 13, a first core layer 141 on the first cladding layer 142 and deposited a second cladding layer 144 on the first core layer 141 and the first cladding layer 142.

A second core layer 143 is deposited on the second cladding layer 144. The second core layer 143 has a predetermined second width 143a and a second thickness 143b. In this embodiment, the second width 143a is smaller than a first width 141a of the first core layer 141. The second thickness 143a is larger than the first thickness 141b of the first core layer 141.

Furthermore, a third cladding layer 146 is deposited on the second core layer 143 and the second cladding layer 144. In addition, a third core layer 145 having a predetermined third width 145a and predetermined third thickness 145b is deposited on the third cladding layer 146. The predetermined third width 145a is larger than the predetermined first width 141a, and the predetermined third thickness 145b is smaller than the predetermined first and second thicknesses 141b, 143b.

A fourth cladding layer 148 is deposited on the third core layer 145 and third cladding layer 146. An additional cladding layer 149 is deposited above the fourth cladding layer 148. All predetermined thicknesses 141b, 143b, 145b are smaller than a thickness of any of the cladding layers 142, 144, 146, 148, 149. It is understood that this waveguide structure 14 is an example for a more sophisticated arrangement of the waveguide structure. In further embodiments, the arrangement of the core layers 141, 143, 145 and their predetermined widths 141a, 143a, 145a and predetermined thicknesses 141b, 143b, 145b are designed for a certain purpose of the application, such as for optical mode converters.

Furthermore, a backside cladding structure 22 comprising a similar backside first, second third fourth and additional cladding layer 222, 224, 246, 248, 249 is deposited on the stress compensation layer 21. A material and a thickness of the backside cladding structure 22 and the cladding layers 142, 144, 146, 148 and 149 of the waveguide structure 14 are substantially the same.

The backside cladding structure 22 thus comprises a backside first cladding layer 222 deposited on the stress compensation layer 21, a backside second cladding layer 224 deposited on the backside first cladding layer 222, a backside third cladding layer 226 deposited on the backside second cladding layer 224, a backside fourth cladding layer 228 deposited on the backside third cladding layer 226 and a backside additional cladding layer 229 deposited on the backside fourth cladding layer 228. A material and a thickness of the respective backside first, second, third, fourth and additional cladding layers 222, 224, 226, 228, 229 and respective the first, second, third, fourth and additional cladding layers 142, 144, 146, 148, 149 are substantially the same. In further embodiments, the number of cladding layers and core layers of the front side waveguide structure 14 and backside cladding structure 22 may vary depending on the requirements of the application.

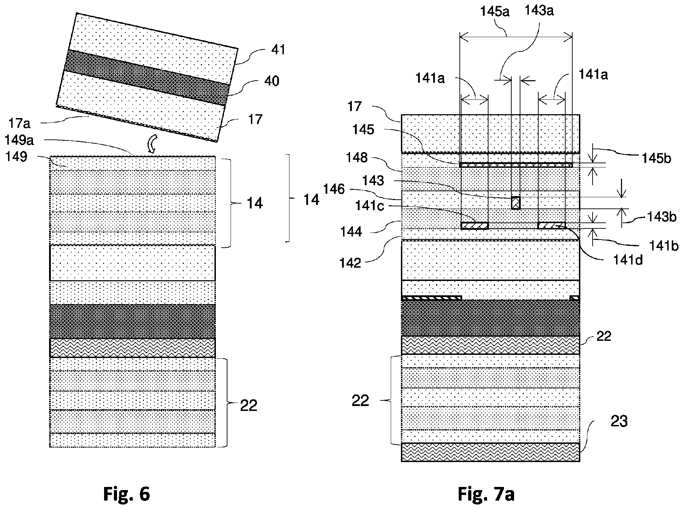

Fig. 6 shows a schematic illustration of an intermediate product of a fiber-waveguide coupler in the method for manufacturing according to a further embodiment of the invention.

The embodiment of an intermediate product of a fiber-waveguide coupler 1 shown in Fig. 6 is based on the fiber-waveguide couplers 1 and/or methods for manufacturing as described above. Only particular differences will be described compared to the intermediate products and the fiber-waveguide couplers 1 as described before.

In the shown manufacturing step, a third substrate 40 comprising a second oxide layer 17 on a front side of the third substrate 40 is provided. The second oxide layer 17 has a bondable top surface 17a, which is brought together with the top surface 149a of the additional cladding layer 149. The top surface 149a is also a bondable surface 149a, which promotes bonding. Also in this embodiment, the third substrate 40 comprises on an opposite side an additional oxide layer 41, which is identical in thickness and material to the second oxide layer 41. The second oxide layer 17 is then bonded on the waveguide structure 14 by a wafer-to-wafer bonding step providing high-quality surfaces.

The substrate 40 is then etched together with the additional oxide layer 41 to expose the second oxide layer 17 on the top of the stack of layers shown in Fig. 6.

Fig. 7a-c shows a schematic illustration of fiber-waveguide couplers according to a further embodiment of the invention.

Fig. 7a to Fig. 7c describes different steps in the manufacturing process of the fiber-waveguide coupler 1. This manufacturing process is based on the method of manufacturing a fiber-waveguide coupler 1 as described above with reference to Fig. 1 and 2 and compatible with at least the fiber-waveguide couplers 1 or the respective intermediate products in Figures 3 through 6.

In Fig. 7a, the waveguide structure 14 includes a first core layer 141, which comprises two first cores 141c, 141d deposited on the first cladding layer 142. A first width 141a and a first thickness 141b of the two first cores 141c, 141d are substantially identical. A second core layer 145 having only one single core 145 is deposited on the second cladding layer 144, that is deposited on the first cladding layer 142 and the first cores 141c, 141d. A second width 143a of the second core layer 143 is smaller than the first width 141a, and a second thickness 143b of the second core layer 143 is larger than the first thickness 141b. A third core layer 145 having a large third width 145a and small thickness 145b compared to the first and second core layers 141, 143 is deposited on a fourth cladding layer 148, which is deposited on a third cladding layer 146 deposited on the second core layer 145 and second cladding layer 144. An additional cladding layer 149 is deposited above the third core layer 145 and the fourth cladding layer 148. The core layers are designed to support only a limited number of optical modes, typically a single mode, and to determine the mode area or mode field diameter of the mode. For SiN as core material, typical values for the width are about 500 nm to several µm and the thickness is about 200 nm to 350 nm.

In this embodiment as well, a second oxide layer 17 is deposited on the waveguide structure 14. Furthermore, a second stress compensation layer 23 is deposited on the backside cladding structure 22. In some embodiments, the deposition of the second stress compensation layer 23 is performed by bonding as well. In this example as well, the second stress compensation layer 23 is designed by its material and thickness that it functions to compensate for the stress caused by the third oxide layer so that a bow of the substrate 10 is reduced. For this, the second stress compensation layer 23 may also comprise a material, which has a high compressive strength and a high heat conductivity in order to be able to dissipate heat. Furthermore, in some embodiments, the material of the second stress compensation layer 23 is configured to withstand temperatures of about 1300°C, which are applied during the fabrication of a photonic integrated circuit, which includes the fiber-waveguide coupler 1 of this embodiment. In some embodiments, a metal is selected as the material of the second stress compensation layer. In some of these embodiments, tungsten has been selected as material of the second stress compensation layer.

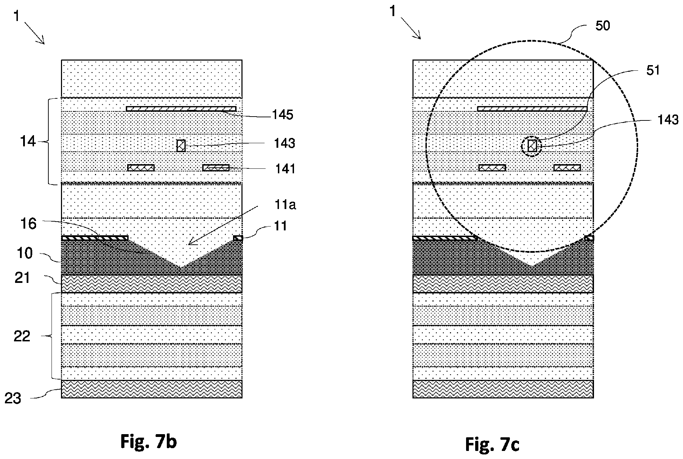

In fig. 7b, a V-groove 16 has been etched into the first surface of the substrate 10 through the opening marker 11a. The location of the V-groove 16 is aligned with the location of the second core layer 143 in the cross-section orthogonal to the first surface 10a of the substrate, as shown in Fig. 7b. The location of the core layer 143 is thus aligned with the opening marker 11a of the mask layer 11. The second core layer 143 is thus located directly above the opening marker 11a of the mask layer 11a.

In Fig. 7c, a fiber placed into the V-groove 16 is indicated. A core 51 of the fiber 50 is centered with respect to the second core 143 in this embodiment. In that way, an optical mode coupled to the second core layer 143 propagates in the second core layer 143 by experiencing optical coupling between the core 51 of the fiber 50 and the core layer 143 of the photonic integrated circuit. The mode area may be influenced by the first and third core layers 141, 145, in particular in case dopants are applied to any of these layers 141, 145.

In further embodiments, the waveguide structure 14 has a different number of core layers 141, 143, 145 having multiple cores, and cladding layers 142, 144, 146, 148, 149.

The V-groove 16 has been etched such that when a fiber 50 having a predetermined size is placed inside the V-groove 16, a core 51 of the fiber 50 is centered with respect to the core layer 143 of the waveguide structure 14. In some embodiments, a standard single mode fiber, such as a SMF-28 (e.g. SMF-28 ULL from Corning) having a core diameter of about 8 µm and a cladding diameter of 125 µm placed into the V-groove 16 such that their surfaces support the fiber 50 will have its core 51 centered with respect to the second core layer 143 of the waveguide structure 14 for optimum coupling efficiency between the fiber and the waveguide. Of course, the fiber-waveguide coupler 1 is not limited to this type of particular single mode fiber and may support large mode area single mode fibers, few mode fibers and even multimode fibers.

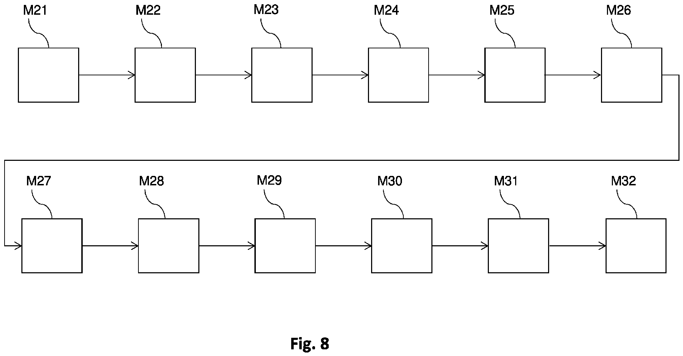

Fig. 8 shows a flow chart for a method for manufacturing of a fiber-waveguide coupler according to a further embodiment of the invention.

This further method is to compensate for a crystalline <100> substrate, in which the <100> crystal plane is not exactly parallel to the surface of the substrate, which typically is a wafer. Therefore, the substrate comprises a pair of alignment marks and a reference V-groove to find out the crystal axis of the substrate. As described in the German Patent Application 102023136803.6 filed on 28.12.2023, these allow determining the crystalline planes so that the core layer can be adjusted to the final V-groove etched into the substrate.

If not stated otherwise, the properties and functions of the respective layers and other items are the same as in the method and fiber-waveguide couplers as described before.

In this method, a pair of alignment markers 101 is first etched in step M21 into a first surface 10a on a front side F of a substrate 10. A mask layer 11 having at least one opening marker 11a is deposited in step M22 spaced apart from the pair of alignment markers at a predetermined distance. A reference V-groove 102 is etched in step M23 by anisotropic etching into the substrate 10 through the opening marker 11a. The mask layer 11 is etched in step M24 to expose the first surface of the substrate 10. A first oxide layer 13 is deposited in step M25 on the first surface of the substrate 10. A backside first oxide layer 21' is deposited in step M26 onto a second surface 10b on a back side B of the substrate 10. The back side B of the substrate 10 opposes the front side F of the substrate 10. A material and a thickness 141b of the backside first oxide layer 21' and the first oxide layer 13 are substantially the same.

Furthermore, a waveguide structure 14 comprising at least a cladding layer 142, 144, 146, 148, 149 and a core layer 141, 143, 145 is deposited in step M27 onto the first oxide layer 13. A backside cladding structure 22 is deposited in step M28 onto the backside oxide layer. A thickness of the backside cladding structure 22 and the waveguide structure 14 are substantially the same.

The waveguide structure 14 and the first oxide layer 13 are etching locally in step M29 to form an opening 160 above the opening marker 11a. A second V-groove is etched in step M30 by anisotropic etching spaced apart at a predetermined distance from the reference V-groove such that when a fiber 50 having a predetermined size 50a is placed inside the V-groove 16, a core 51 of the fiber 50 is centered with respect to the core layer 141, 143, 145 of the waveguide structure.

The method further comprises the two optional steps, i.e. a step of bonding in step M31 a second oxide layer 17 onto the waveguide structure 14, and a step of bonding in step M32 a second stress compensation layer 23 onto the backside cladding structure 22.

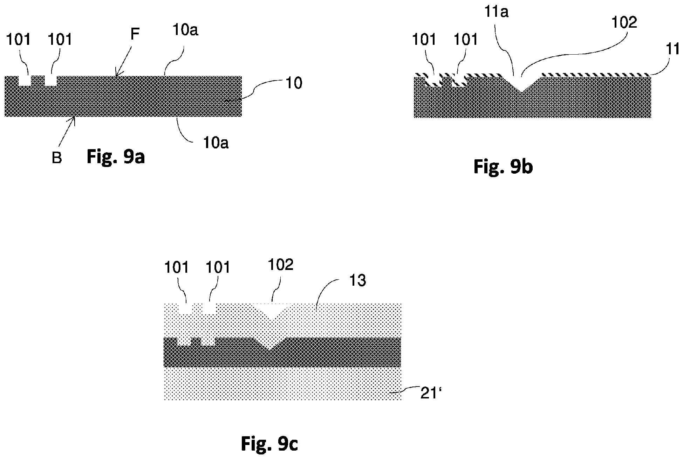

Fig. 9a-e show a schematic illustration of a fiber-waveguide couplers according to a further embodiment of the invention.

Fig. 9a to Fig. 9c describe different steps in the manufacturing process of the fiber-waveguide coupler 1. This manufacturing process is based on the further method of manufacturing a fiber-waveguide coupler 1 as described above with reference to Fig. 8.

In Fig. 9a, a substrate 10 having a first surface 10a and a second surface 10b opposing the first surface 10a. The first surface 10a of the substrate 10 comprises a pair of alignment markers 101, which are parallel to each other.

In fig. 9b, the first surface 10a of the substrate also comprises a reference V-groove 102 spaced apart by a predetermined distance from the alignment markers 101. A mask layer 11 having at least one opening marker 11a is deposited spaced apart from the pair of alignment markers 101 at a predetermined distance. Through this opening marker 11a, a reference V-groove 102 is etched into the first surface 10a of the substrate 10.

In Fig. 9c, the mask layer is etched so that only the substrate 10 including the first surface 10a having the alignment markers 101 and the reference V-groove 102 remains from the previous step of Fig. 9b. A first oxide layer 13 is deposited on the first surface 10a of the substrate 10, and a backside first oxide layer 21' is deposited on the back side B of the substrate 10. The first oxide layer 13 and the backside first oxide layer 21' are typically manufactured in the same process step, leading to identical materials and identical thicknesses.

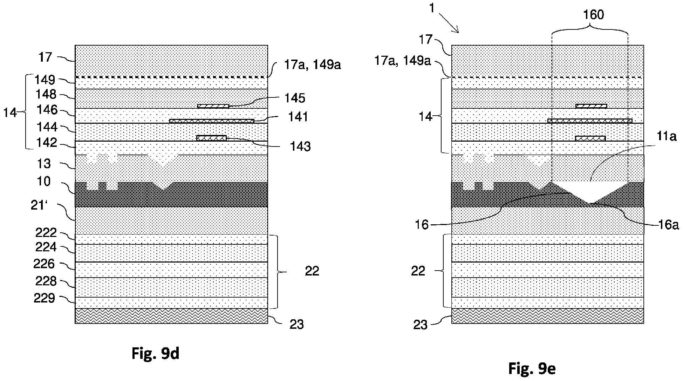

In Fig. 9d, a waveguide structure 14 is deposited on the first oxide layer 13, the waveguide structure 14 comprising three core layers 141, 143, 145 and five cladding layers 142, 144, 146, 148, 149. Also in this embodiment, the core layers 141, 143, 145 have predetermined widths 141a, 143a, 145a and a predetermined thicknesses 141b, 143b, 145b (not indicated in this figure, similar use as in Fig. 5 and 7a), designed for the particular application of a photonic integrated circuit formed in the waveguide structure.

In addition, a backside cladding structure 22 is deposited on the backside first oxide layer 21'. The backside cladding structure comprises basically identical cladding layers 222, 224, 226, 228, 229 as the respective cladding layers 142, 144, 146, 148, 149 of the waveguide structure at the front side of the substrate 10, as described before. Therefore, a thickness of the backside cladding structure 22 and the waveguide structure 14 are substantially the same.

In Fig. 9e, the waveguide structure 14 and the first oxide layer 13 have been etched locally to form an opening 160 above the opening marker 11a. A V-groove 16 spaced apart by a predetermined distance from the reference groove 102 and extending in a direction Z-direction (not shown here) is etched into the first surface 10a of the substrate 10 by an anisotropic etching process. In this etching step, all layers above the substrate 10, i.e. the first oxide layer 13, the waveguide structure 14 and the second oxide layer 17 were etched as well resulting in an opening 160.

The Z-direction is substantially orthogonal to the first surface. However, in this scenario, in case the <100> crystalline plane is tilted with respect to the first surface 10 of the substrate, the extension of the V-groove typically is not exactly parallel to the first surface 10a. In fact, a valley or trench 16a of the V-groove follows the <110> crystalline plane.

In this embodiment as well, a second oxide layer 17 is deposited on the waveguide structure 14 by bonding. For that, both, the upper additional cladding layer 149 and the second oxide layer 17 have bondable surfaces 149a, 17a that are brought together in the bonding process. In order to reduce a bow of the substrate, a second stress compensation layer 23 is deposited onto the backside cladding structure 22.

In the detailed description above, various features have been combined in one or more examples in order to improve the rigorousness of the illustration. However, it should be clear in this case that the above description is merely illustrative but in no way restrictive in nature. It serves to cover all alternatives, modifications and equivalents of the various features and exemplary embodiments.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### LIST OF USED REFERENCE SIGNS

- 1: Fiber-waveguide coupler
- 10: substrate
- 10a: first surface
- 10b: second surface
- 11: mask layer
- 11a: opening marker
- 12: intermediate layer
- 12a, 17a, 142a: bondable top surface
- 13: first oxide layer
- 14: waveguide structure
- 16: V-groove
- 17: second oxide layer
- 21, 21': stress compensation layer
- 22: backside cladding structure
- 23: second stress compensation layer
- 30: second substrate
- 31: additional oxide layer
- 40: third substrate
- 50: fiber
- 50a: predetermined size of the fiber
- 51: core
- 101: alignment markers
- 102: reference V-groove
- 141: (first) core layer
- 141a: predetermined (first) width of (first) core layer
- 141b: predetermined (first) thickness of (first) core layers
- 142: first cladding layer
- 143: second core layer
- 143a: predetermined second width of second core layer
- 143b: predetermined second thickness of second core layer
- 144: second cladding layer
- 145: third core layer
- 145a: predetermined third width of third core layer
- 145b: predetermined third thickness of third core layer
- 146: third cladding layer
- 148: fourth cladding layer
- 149: additional cladding layer
- 160: opening
- 222: backside first cladding layer
- 224: backside second cladding layer
- 226: backside third cladding layer
- 228: backside fourth cladding layer
- 229: backside additional cladding layer

- B: back side of the substrate
- F: front side of the substrate
- M1-M31: method steps

## Claims

1. Method for manufacturing a fiber-waveguide coupler (1), comprising:
etching (M21) a pair of alignment markers (101) into a first surface (10a) on a front side (F) of a substrate (10);
depositing (M22) a mask layer (11) having at least one opening marker (11a) spaced apart from the pair of alignment markers at a predetermined distance;
anisotropic etching M23) a reference V-groove (102) into the substrate (10) through the opening marker (11a);
etching (M24) the mask layer (11) in order to expose the first surface of the substrate (10);
depositing (M25) a first oxide layer (13) on the first surface of the substrate (10);
depositing (M26) a backside first oxide layer (13) onto a second surface on a back side (B) of the substrate (10), the back side (B) of the substrate (10) opposing the front side (F) of the substrate (10), wherein a material and a thickness (141b) of the backside first oxide layer (13) and the first oxide layer (13) are substantially the same;
depositing (M27) a waveguide structure (14) comprising at least a cladding layer (142, 144, 146, 148, 149) and a core layer (141, 143, 145) onto the first oxide layer (13);
depositing (M28) a backside cladding structure (22) onto the backside oxide layer, wherein a thickness of the backside cladding structure (22) and the waveguide structure (14) are substantially the same; and
etching (M29) locally the waveguide structure (14) and the first oxide layer (13) to form an opening (160) above the opening marker (11a);
anisotropic etching (M30) a second V-groove spaced apart at a predetermined distance from the reference V-groove (102) such that when a fiber (50) having a predetermined size (50a) is placed inside the V-groove (16), a core (51) of the fiber (50) is centered with respect to the core layer (141, 143, 145) of the waveguide structure (14).

2. Method according to claim 1, further comprising:
bonding (M31) a second oxide layer (17) onto the waveguide structure (14).

3. Method according to claim 2, wherein the waveguide structure (14) and the second oxide layer (17) have bondable surfaces (149a, 17a) promoting bonding to another semiconductor or oxide layer, wherein the bondable surfaces (149a, 17a) of the waveguide structure (14) and the second oxide layer (17) are brought together in the bonding process (M31).

4. Method according to claim 2 or 3, further comprising bonding (M32) a second stress compensation layer (23) onto the backside cladding structure (22).

5. Fiber-waveguide coupler (1), comprising:
a substrate (10) having a first surface (10a) and a second surface (10b) opposite to the first surface (10a),
the first surface (10a) of the substrate (10) comprising:
- a pair of alignment markers (101),
- a reference V-groove (102) spaced apart by a predetermined distance from the alignment markers (101),
- a V-groove (16) spaced apart by a predetermined distance from the reference groove and extending in a direction Z-direction, wherein the Z-direction is substantially orthogonal to the first surface (10a);
a first oxide layer (13) on the first surface (10a) of the substrate (10),
a backside first oxide layer (21') deposited on the back side (B) of the substrate (10),
a waveguide structure (14) deposited on the first oxide layer (13), the waveguide structure (14) comprising a core layer (141, 143, 145) and a cladding layer (142, 144, 146, 148, 149), wherein the core layer (141, 143, 145) has a predetermined width (141a, 143a, 145a) and a predetermined thickness (141b, 143b, 145b), wherein the V-groove (16) is arranged in an opening (160) of the waveguide structure (14) and the first oxide layer (13), and
a backside cladding structure (22) deposited on the backside first oxide layer (21'), wherein a thickness of the backside cladding structure (22) and the waveguide structure (14) are substantially the same.

6. Fiber-waveguide coupler (1) according to claim 4, further comprising a second oxide layer (17) deposited on the waveguide structure (14).

7. Fiber-waveguide coupler (1) according to claim 6, wherein the waveguide structure (14) and the second oxide layer (17) have bondable surfaces (149a, 17a) that promote bonding to another semiconductor or oxide layer.

8. Fiber-waveguide coupler (1) according to claim 6 or 7, further comprising a second stress compensation layer (23) is deposited on the backside cladding structure (22).

9. Fiber-waveguide coupler (1) according to any of claims 5 to 8, wherein the waveguide structure (14) comprises:
a first cladding layer (142) on the first oxide layer (13),
a first core layer (141) on the first cladding layer (142),
a second cladding layer (144) on the first core layer (141) and the first cladding layer (142),
a second core layer (143) on the second cladding layer (144), wherein the second core layer (143) has a predetermined second width (143a) and a second thickness (143b);
a third cladding layer (146) on the second core layer (143) and the second cladding layer (144),
wherein a core (51) of a fiber (50) having a predetermined size (50a) and placed inside the V-groove (16) is centered with respect to one of the first core layer (141) and the second core layer (143) of the waveguide structure (14).

10. Fiber-waveguide coupler (1) according to any of claims 9, wherein the backside cladding structure (22) comprises:
a backside first cladding layer (222) deposited on the stress compensation layer (21),
a backside second cladding layer (224) deposited on the backside first cladding layer (222), and
a backside third cladding layer (226) deposited on the backside second cladding layer (224), wherein a material and a thickness of the respective backside first, second and third cladding layers (222, 224, 226) and respective the first, second and third cladding layers (142, 144, 146) are substantially the same.

11. Fiber-waveguide coupler (1) according to claim 9 or 10, further comprising a third cladding layer (146) deposited on the second core layer (143) and the second cladding layer (144), and
a third core layer (145) having a predetermined third width (145a) and predetermined third thickness (145b) deposited on the third cladding layer (146).

12. Fiber-waveguide coupler (1) according to claim 11, wherein the predetermined third width (145a) is larger than the predetermined first width (141a), and the predetermined third thickness (145b) is smaller than the predetermined first and second thicknesses (141b, 143b).

13. Fiber-waveguide coupler (1) according to claim 11 or 12, further comprising a fourth cladding layer (148) deposited on the third core layer (145) and third cladding layer (146), and an additional cladding layer (149) deposited above the fourth cladding layer (148).

14. Fiber-waveguide coupler (1) according to any of claims 9 to 13, further comprising an additional cladding layer deposited above the fourth cladding layer (148) for improved confinement of the optical mode.

15. Fiber-waveguide coupler (1) according to claims 6 or 7 and 14, wherein the second oxide layer (17) is deposited onto a top surface (149) of the additional cladding layer (149).
